# EUROPÄISCHE PATENTSCHRIFT

(11) **EP 2 522 601 B1**
(45) Veröffentlichungstag und Bekanntmachung des Hinweises auf die Patenterteilung: **24.09.2014**
(21) Anmeldenummer: 11184060.9
(22) Anmeldetag: 06.10.2011
(51) Int. Cl.: B65G 45/12, B65G 45/16

(54) **Abstreifvorrichtung für verschmutzte Förderbänder aus Gummi od. dgl.**
Scraper device for dirty conveyor belts made of rubber or similar
Dispositif racleur pour bandes convoyeuses salies en caoutchouc ou analogue

(30) Priorität: 11.05.2011 DE 102011050265
(43) Veröffentlichungstag der Anmeldung: 14.11.2012
(73) Patentinhaber: Carsjens, Ullrich, 41065 Mönchengladbach (DE)
(72) Erfinder: Carsjens, Ullrich, 41065 Mönchengladbach (DE)
(74) Vertreter: Bonsmann, Joachim Bernhard

(56) Entgegenhaltungen:
- FR-A1- 2 339 442
- US-A- 4 202 437
- US-A- 5 735 385
- US-A1- 2010 294 623

## Beschreibung

Die Erfindung betrifft eine Abstreifvorrichtung für Förderbänder mit wenigstens einem an einem quer zur Förderbandlängsrichtung angeordneten Tragelement angebrachten Abstreifsegment mit daran befestigter Abstreiflamelle, die an das Förderband anpressbar sind, wobei das wenigstens eine Abstreifsegment über einen aus einem Elastomer bestehenden Verbindungsbereich drehfest mit dem Tragelement verbunden ist.

Derartige Abstreifvorrichtungen dienen zum mechanischen Reinigen von Transport- bzw. Förderbändern, die beispielsweise im Bereich des Schüttguttransports eingesetzt werden. Ein solches Förderband transportiert das Fördergut entlang einem Obertrum bis zu einem Umlenkbereich, in dem das Förderband um eine Umlenkrolle herum geführt wird und dabei das Fördergut in eine Übergabestelle abwirft; entlang einem Untertrum läuft das Förderband wieder zurück. Da sich am Förderband Fördergut festsetzen kann, werden zum Reinigen des Förderbands insbesondere im Bereich der Umlenkrolle oder im Untertrum Abstreifvorrichtungen eingesetzt.

Gattungsgemäße Abstreifvorrichtungen sind bekannt. So offenbart die DE 36 44 934 A1 eine Abstreifvorrichtung zum Reinigen von Förderbändern, die eine eine Tragachse weitgehend umgreifende Lagerachse und darauf montierbare Federarme umfasst, die Schabeblatthalter für Schabeblätter tragen. Die Federarme werden über eine Montagevorrichtung, die als die Lagerachse zumindest teilweise elastisch umfassende Schelle ausgebildet ist, auf der Lagerachse montiert.

EP 0 847 942 A1 offenbart eine Abstreifvorrichtung für Förderbänder, bei der eine Abstreifklinge an einer federnden Montierung befestigt ist, die einen im Querschnitt rechteckigen Schaft umschließt.

Aus DE 600 13 665 T2 ist es bekannt, dass eine Abstreifklingenbaugruppe einen Anbringungsträger umfasst, der eine Querwelle vollumfänglich formschlüssig umschließt.

Aus DE 295 03 929.9 U1 ist eine Abstreifvorrichtung bekannt, bei der auf einer Tragachse mehrere verschiebbare Abstreiferelemente angeordnet sind, die aus einer rohrförmigen, auf der Tragachse arretierbaren Büchse, einem darauf befestigten entropieelastischen Grundkörper mit mindestens einer Blattfeder und einer von dieser getragenen Abstreifleiste bestehen. Den in den vorgenannten Druckschriften offenbarten Abstreifvorrichtungen ist gemeinsam, dass die Abstreifsegmente, die die Abstreifklingen bzw. die Abstreifleiste tragen, das Tragelement jeweils über dessen gesamten Umfang umschließen.

Aus der Druckschrift DE 10 2004 013 731 A1, die durch Bezugnahme in die vorliegende Anmeldung aufgenommen wird, ist eine Abstreifvorrichtung bekannt, bei der die Abstreifsegmente als Wende- oder Mehrfach-Wendeabstreifsegmente ausgebildet sind, die eine Trägereinrichtung über ihren gesamten Umfang ringartig umschließen.

Bei der Montage und ggf. bei einem aufgrund einer Beschädigung notwendigen Austausch von einzelnen Abstreifsegmenten werden die Abstreifsegmente in Längsrichtung der Trägereinrichtung auf diese aufgeschoben. Dies ist mit einem erhöhten Aufwand verbunden, weil hierfür die Abstreifvorrichtung demontiert, ggf. im Randbereich eines Tragelements ansetzende Haltearme abgenommen und benachbarte Abstreifsegmente entfernt werden müssen.

Es ist Aufgabe der vorliegenden Erfindung, eine Abstreifvorrichtung, insbesondere einen Wendeabstreifer oder einen optional aufrüstbaren Wendeabstreifer, zu schaffen, wobei der o.g. Nachteil nicht auftritt.

Diese Aufgabe wird durch einen Wendeabstreifer gemäß Anspruch 1 bzw. einen optional zu einem Wendeabstreifer aufrüstbaren Abstreifer gemäß Anspruch 2 gelöst.

Eine erfindungsgemäße Abstreifvorrichtung für Förderbänder gemäß Anspruch 1, die als Wendeabstreifer ausgebildet ist, umfasst eine Mehrzahl von Abstreifsegmenten, die lösbar an einem Tragelement angebracht bzw. anbringbar sind. Das Tragelement ist im montierten Zustand quer zur Förderrichtung eines Förderbandes angeordnet. An den Abstreifsegmenten sind Abstreiflamellen befestigt. Die Abstreiflamellen können über eine an sich bekannte Vorspannvorrichtung, die beispielsweise mit Hilfe einer oder mehrerer Federn das Tragelement mit einer auf das Förderband gerichteten Kraft beaufschlagt, an das Förderband angepresst werden. Die Abstreifsegmente sind drehfest mit dem Tragelement verbunden bzw. verbindbar, ermöglichen jedoch eine gewisse Beweglichkeit der Abstreiflamellen. Die Abstreifsegmente weisen hierfür einen aus einem Elastomer, beispielsweise aus Gummi, aus Polyurethan oder aus einem anderen Kunststoff bestehenden Verbindungsbereich auf, der einen integralen Teilbereich des Abstreifsegments bilden kann.

Erfindungsgemäß umschließen die Abstreifsegmente bzw. der Verbindungsbereich der Abstreifsegmente das Tragelement jeweils näherungsweise halbseitig. Ferner sind mindestens zwei Abstreifsegmente einander gegenüberliegend mit dem Tragelement verbunden bzw. verbindbar.

Dadurch, dass die Abstreifsegmente das Tragelement jeweils nur halbseitig umschließen und dass mindestens zwei Abstreifsegmente einander gegenüberliegend mit dem Tragelement verbunden sind bzw. verbindbar sind, sind die Abstreifsegmente einzeln aufsetz- bzw. abnehmbar, ohne benachbarte Segmente, die Vorspannvorrichtung oder die gesamte Abstreifvorrichtung demontieren zu müssen. Ferner kann ein lediglich ein Abstreifsegment aufweisender Abstreifer jederzeit mit minimalem Aufwand zu einem Wendeabstreifer umgerüstet werden.

Die Abstreifsegmente können insbesondere im Querschnitt asymmetrisch aufgebaut sein, um als Torsionselemente bei einer Krafteinwirkung auf die Abstreiflamellen in unterschiedliche Richtungen unterschiedliche Verformungen und ein unterschiedliches Rückstellverhalten der Abstreiflamellen zu ermöglichen. Als besonders vorteilhaft hat sich dabei eine keilförmige Gestaltung der Abstreifsegmente erwiesen, die außerdem die Verschmutzungsanfälligkeit verringert.

Gemäß einer besonderen Ausführungsform der Erfindung sind jeweils zwei Abstreifsegmente paarweise einander in der Weise zugeordnet, dass die ein Paar bildenden Abstreifsegmente einen Abschnitt des Tragelements über dessen gesamten Umfang umschließen, insbesondere ringförmig umschließen. Hierdurch wird eine sichere Befestigung erzielt, bei der das Tragelement außerdem vor einer Verschmutzung durch herab fallendes Fördergut weitgehend geschützt ist.

In bevorzugter Weise sind jeweils zwei bzw. die ein Paar bildenden Abstreifsegmente mit einer gemeinsamen Verschraubung am Tragelement befestigt bzw. befestigbar. Hierdurch wird auf besonders einfache Weise eine einfache und sichere, jedoch lösbare Verbindung der Abstreifsegmente mit dem Tragelement erzielt.

Um eine derartige gemeinsame Verschraubung zu erzielen, sind die beiden ein Paar bildenden Abstreifsegmente bevorzugt entsprechend einer Punktspiegelung bezogen auf die Rohrmittelachse ausgebildet. Auf diese Weise können identisch ausgebildete Abstreifsegmente auf beiden Seiten verwendet werden. Falls unterschiedliche Abstreifereigenschaften gewünscht sein sollten, so können die Abstreifsegmente selbstverständlich auch unterschiedlich ausgebildet werden, sofern die punktsymmetrische Formgebung im Bereich der Verschraubung des Rohres beibehalten wird.

Es können auch mehrere gemeinsame Verschraubungen zur Befestigung der ein Paar bildenden Abstreifsegmente vorgesehen sein, z.B. bei größeren Bandbreiten und Ausführungen.

Weiterhin umfassen die Abstreifsegmente jeweils ein halbschalenförmiges Verbindungselement zur Verbindung mit dem Tragelement, wobei das Verbindungselement bevorzugt als Verbindungsblech ausgebildet ist. Der Begriff "Verbindungsblech" soll jedoch nicht auf metallische Flächengebilde beschränkt sein, sondern auch andere Flächengebilde, wie z.B. Kunststoff, umfassen.

Insbesondere ist der Verbindungsbereich eines Abstreifsegments mit dem halbschalenförmigen Verbindungsblech verbunden, das am Tragelement befestigt bzw. befestigbar ist. Hierdurch kann eine dauerhaft feste Verbindung des Abstreifsegments mit dem Tragelement gewährleistet werden.

Insbesondere in dem Fall, dass das Tragelement als zylindrisches Rohr ausgebildet ist, kann das Verbindungsblech näherungsweise halbzylindrisch ausgebildet sein, wobei die Innenkontur des Verbindungsblechs zumindest abschnittsweise der Außenkontur des Rohrs entspricht. Das Verbindungsblech liegt daher zumindest abschnittsweise flächig auf der Außenseite des Rohrs bzw. des Tragelements an, wodurch eine weiter verbesserte Verbindung erzielt wird. Alternativ kann das Tragelement auch ein unrundes Profil, wie beispielsweise eine Rechteckform oder eine elliptische Form aufweisen, wobei in diesem Fall die Verbindungselemente eine entsprechende Geometrie aufweisen müssen.

Gemäß einer bevorzugten Ausführungsform der Erfindung weist das Verbindungsblech im Querschnitt einseitig eine Schulter auf, die zum Endbereich des näherungsweise halbkreisförmigen Querschnitts hin in einen ersten geraden Abschnitt übergeht, der parallel zu einem gegenüberliegenden Endbereich des näherungsweise halbkreisförmigen Querschnitts gerichtet ist. Das Verbindungsblech ist somit bezüglich einer Längsmittelebene asymmetrisch aufgebaut. Hierdurch wird die Möglichkeit geschaffen, dass ein Verbindungsblech eines Abstreifsegments mit dem Verbindungsblech eines weiteren Abstreifsegments derart zusammengesetzt werden kann, dass die Verbindungsbleche eine Einheit bilden, die in einfacher und sicherer Weise mit dem Rohr verschraubt werden kann.

In besonders vorteilhafter Weise entspricht dabei die lichte Innenweite zwischen dem ersten geraden Abschnitt und dem gegenüberliegenden Endbereich näherungsweise dem Außendurchmesser des Rohrs zuzüglich der Blechdicke im gegenüberliegenden Endbereich sowie ggf. der Dicke einer Unterlegscheibe, die das Anziehen der Verschraubung erleichtert. Hierdurch können gleichartige Verbindungsbleche als Einheit zusammengesetzt werden, die mit dem Rohr verschraubt werden. Dies ermöglicht es, die Verbindungsbleche einer Mehrzahl von Abstreifsegmenten oder aller Abstreifsegmente der erfindungsgemäßen Abstreifvorrichtung in gleicher oder im Wesentlichen gleicher Weise auszubilden, was eine kostengünstige Fertigung und eine einfache Handhabung erlaubt.

Ferner ist es bevorzugt, dass der dem ersten geraden Abschnitt gegenüberliegende Endbereich des näherungsweise halbkreisförmigen Querschnitts einen zweiten geraden Abschnitt aufweist. Insbesondere können im ersten und im zweiten geraden Abschnitt jeweils Durchgangsbohrungen für die Verschraubung mit dem Tragelement vorgesehen sein, die zur Befestigung der Abstreifsegmente übereinander zu liegen kommen und eine feste und sichere gemeinsame Verschraubung ermöglichen. Alternativ kann anstelle einer Durchgangsverschraubung auch eine Einzelverschraubung erfolgen, bei entsprechend biegesteifer Ausbildung der Verbindungselemente ggf. auch nur einseitig.

Gemäß einer weiteren bevorzugten Ausführungsform der Erfindung ist mindestens eine einem Abstreifsegment zugeordnete Abstreiflamelle an einem Halter befestigt, der einen Endbereich aufweist, der in einen aus einem Elastomer bestehenden Bereich des Abstreifsegments, beispielsweise in den Verbindungsbereich, eingebettet ist. Der Endbereich kann beispielsweise durch Einkleben, Eingießen und/oder Einvulkanisieren in den aus dem Elastomer bestehenden Bereich des Abstreifsegments eingebettet sein. Hierdurch wird eine feste, jedoch elastisch bewegliche Verbindung der Abstreiflamelle bzw. der Abstreiflamellen mit dem Abstreifsegment bzw. mit dem Tragelement erzielt. Der eingebettete Endbereich des Halters kann T-förmig ausgebildet sein, um die Festigkeit der Einbettung zu erhöhen. Der Halter kann durch einen Zwischenbügel verlängert werden, um die Abstreiflamelle bzw. die Abstreiflamellen in eine für die Reinigung des Förderbandes optimale Position zu bringen. Eine derartige Reinigungsposition kann dann nicht nur im Untertrumbereich liegen, sondern beispielsweise auch im Trommelbereich des Förderbandes, wodurch ein Vorkopfabstreifer realisiert ist.

Der Halte kann aber auch von vornherein z.B. eine gebogene Form besitzen, wie dies bei Vorkopfabstreifern oder zum Reinigen von Trommeln erforderlich ist.

In vorteilhafter Weise können die eingebetteten Endbereiche der Halter zweier einander gegenüberliegender Abstreifsegmente unterschiedlich, insbesondere unterschiedlich lang oder mit Abstreiflamellen aus unterschiedlichen Materialien ausgebildet sein. Hierdurch kann ein unterschiedliches elastisches Verhalten der Abstreifsegmente, insbesondere eine unterschiedlich steife Lagerung der jeweiligen Abstreiflamellen erzielt werden. Dies ist insbesondere bei einer Verwendung der Abstreifvorrichtung als Wendeabstreifer für einen reversierenden Betrieb des Förderbandes vorteilhaft, wobei eines der beiden einander gegenüberliegenden Abstreifsegmente bzw. die daran befestigte Abstreiflamelle oder Abstreifleiste zur Reinigung des Förderbandes in der einen Förderrichtung genutzt wird und das andere der beiden Abstreifsegmente bzw. daran befestigten Abstreiflamellen oder Abstreifleisten zur Reinigung in der anderen Förderrichtung. Alternativ kann damit auch unterschiedlichem Fördergut Rechnung getragen werden.

Die einander gegenüberliegenden Abstreifsegmente bzw. die Halter können unterschiedlich gestaltete Abstreiflamellen sowie unterschiedliche Formen, Höhen und/oder Neigungen aufweisen, um bei der jeweiligen Förderrichtung des Förderbandes jeweils einen optimalen Reinigungseffekt zu erzielen. Auch die elastomeren Materialien, insbesondere die Shore-Härten der verwendeten Elastomere, können aus dem gleichen Grund unterschiedlich sein. Wenn die Abstreifvorrichtung eine Reihe von nebeneinander angeordneten Paaren von Abstreifsegmenten umfasst, kann beispielsweise eine obere Reihe von Abstreifsegmenten eine erste und eine untere Reihe eine zweite Bauform aufweisen.

Weiterhin ist es vorteilhaft, wenn die Abstreifsegmente optional einseitig mit dem Tragelement verbindbar sind (gemäß Anspruch 2). Dabei ist ein Zwischenblech, ein Distanzblech oder zumindest eine Unterlegscheibe vorgesehen, das bzw. die anstelle des Verbindungsblechs des gegenüberliegenden Abstreifsegments den Kraftschluss mit dem Verbindungsblech des einseitig mit dem Tragelement verbundenen Abstreifsegments herstellt. Diese Ausführungsform ermöglicht die Verwendung der erfindungsgemäßen Abstreifvorrichtung optional auch als Standard-Abstreifer, wenn nicht nur eine Verwendung als Wendeabstreifer vorgesehen ist.

Der Einsatz eines Wendeabstreifers kann auch zur Optimierung von Wartungsintervallen benutzt werden, indem nach Verschleiß einer Abstreiferreihe auf die andere Seite "umgeschaltet" wird.

Die erfindungsgemäße Abstreifvorrichtung kann sowohl im Untertrum wie im Bereich der Umlenktrommel eingesetzt werden.

Die Erfindung wird nachfolgend anhand der Zeichnungen beispielhaft näher erläutert. Es zeigen:
- Fig. 1: zwei einander gegenüberliegend an einem rohrförmigen Tragelement angeordnete Abstreifsegmente gemäß einem Ausführungsbeispiel einer erfindungsgemäßen Abstreifvorrichtung in perspektivischer An-sicht;
- Fig. 2: eine Mehrzahl von an einem rohrförmigen Tragelement angeordne-ten Paaren von Abstreifsegmenten in perspektivischer Ansicht;
- Fig. 3a: eine teilweise geschnittene Seitenansicht der Anordnung der Fig. 1 oder 2;
- Fig. 3b: ein Detail aus Fig. 3a in vergrößerter Darstellung;
- Fig. 3c: eine Schnittdarstellung durch eine Abstreifvorrichtung mit nur einem Abstreifsegment;
- Fig. 4: einen Elastomerkörper eines Abstreifsegments gemäß Fig. 1 oder 2 in perspektivischer Ansicht;
- Fig. 5: ein Verbindungsblech eines Abstreifsegments gemäß Fig. 1 oder 2 in perspektivischer Ansicht;
- Fig. 6: einen Querschnitt des Verbindungsblechs gemäß Fig. 5;
- Fig. 7: in einer Querschnittsansicht die Einbettung eines Halters in einen Elastomerkörper eines Abstreifsegments gemäß einem ersten Aus-führungsbeispiel;
- Fig. 8: in einer Querschnittsansicht einen Elastomerkörper eines Abstreif-segments mit einer Einbettung eines Halters gemäß einem zweiten Ausführungsbeispiel;
- Fig. 9: ein weiteres Ausführungsbeispiel einer erfindungsgemäßen Abstreif-vorrichtung;
- Fig. 10: ein weiteres Ausführungsbeispiel einer erfindungsgemäßen Abstreif-vorrichtung mit einem gebogenen Bügel;
- Fig. 11: eine Ansicht einer erfindungsgemäßen Abstreifvorrichtung im Be-reich des Innengurtes eines Förderbandes;
- Fig. 12: eine weitere Schnittdarstellung eines erfindungsgemäßen Abstreif-elements;
- Fig. 13: eine Detail-Schnittdarstellung eines Abstreifelementes; und
- Fig. 14: ein Verstärkungselement zum Einsatz bei einer erfindungsgemäßen Abstreifvorrichtung.

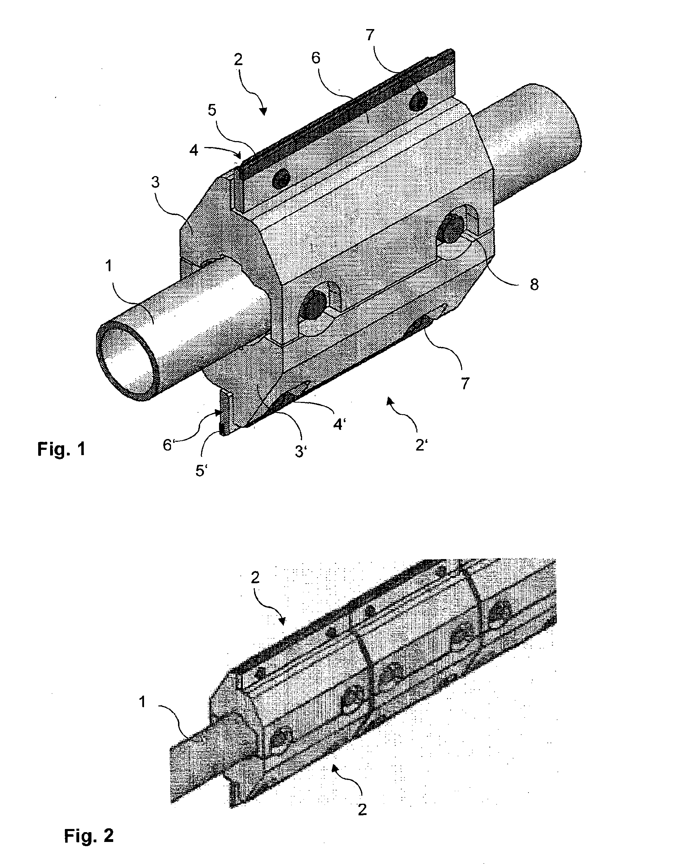

Gemäß Fig. 1 umfasst ein Ausführungsbeispiel einer erfindungsgemäßen Abstreifvorrichtung ein als Rohr 1 ausgebildetes Tragelement, an dem einander gegenüberliegend zwei insgesamt mit 2, 2' bezeichnete Abstreifsegmente angeordnet sind. Die Abstreifsegmente umfassen jeweils einen Elastomerkörper 3, 3', der beispielsweise aus Gummi, Polyurethan oder aus einem anderen elastisch verformbaren Kunststoff bestehen kann. An oder in dem Elastomerkörper 3, 3' ist jeweils ein Halter 4, 4' angebracht, an dem auswechselbar die Abstreiflamelle 5 angebracht ist. Die Abstreiflamelle 5, 5' ist hierzu mit einer Abstreifleiste 6, 6' verbunden, beispielsweise verlötet, die wiederum jeweils mit Schrauben 7 am Halter (Halteblech) 4, 4' befestigt. Die beiden Abstreifsegmente 2, 2' sind gemeinsam mit Schrauben 8, deren Schraubenköpfe in Fig. 1 zu erkennen sind, am Rohr 1 befestigt.

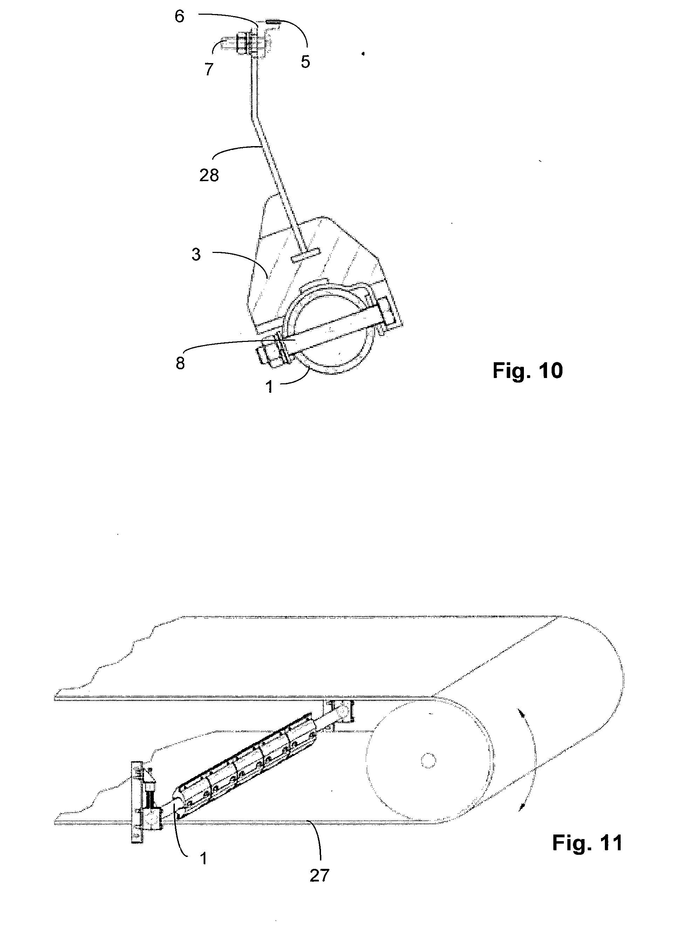

Im standardmäßigen Betriebszustand ist das Rohr 1 quer zu einem Förderband angeordnet und wird durch eine Vorspanneinrichtung derart gegen das Förderband vorgespannt, dass die Abstreiflamellen 5 gegen das Förderband gedrückt werden (nicht dargestellt). Des Weiteren kann das Rohr schräg zum Förderband im Bereich des Innengurtes (laufseitig) angeordnet sein (vgl. Fig. 11). Gemäß Fig. 2 können mehrere Paare von Abstreifsegmenten 2, 2' entlang des Rohrs 1 angebracht sein, wobei die Abstreifsegmente eine obere und eine untere Reihe bilden.

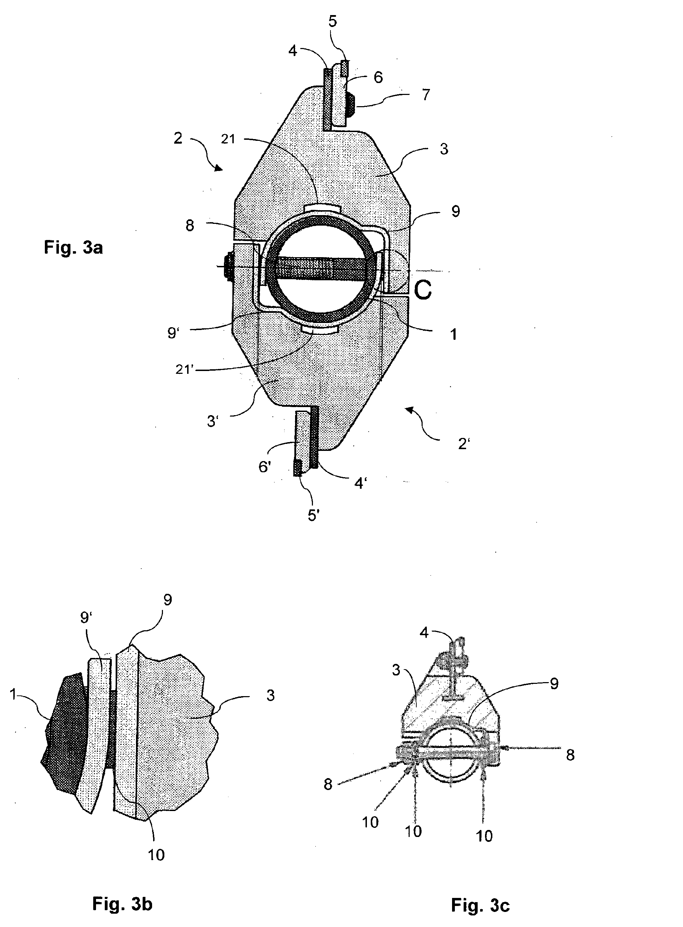

Fig. 3a zeigt in einer teilweise geschnittenen Seitenansicht die Befestigung der Abstreifsegmente 2, 2' am Rohr 1. Hierfür sind die Elastomerkörper 3, 3' jeweils mit einem Verbindungsblech 9, 9' verbunden, beispielsweise durch Kleben, Eingießen, Umgießen oder An- oder Einvulkanisieren. Die beiden Abstreifsegmente 2, 2' sind mit ihren Verbindungsblechen 9, 9' derart aneinander angesetzt, dass sie das Rohr 1 über dessen gesamten Umfang umschließen. Mit Hilfe der Schraube 8 sind die Verbindungsbleche 9, 9' mit dem Rohr 1 verschraubt, so dass die Elastomerkörper 3, 3' drehfest mit dem Rohr 1 verbunden sind. Aufgrund der elastischen Eigenschaften des Elastomerkörpers 3, 3', der als Verbindungsbereich des Abstreifsegments 2, 2' wirkt, sind die Halter 4, 4' und damit die Abstreiflamellen 5 elastisch mit dem Rohr 1 verbunden.

Die Elastomerkörper 3, 3' müssen nicht vollständig an den Verbindungsblechen 9, 9' anliegen. Vielmehr können, wie in Fig. 3a dargestellt, in den Elastomerkörpern 3, 3' Ausnehmungen 21, 21' in der Zeichnung bei ca. 12 Uhr und bei ca. 6 Uhr bezogen auf den Rohrumfang vorgesehen sein. Abhängig von der Dimensionierung dieser Ausnehmungen 21, 21' wird eine größere Elastizität der Elastomerkörper 3, 3' vor Allem in vertikaler Richtung erzielt. Hierdurch kann das Federverhalten des Abstreifers zusätzlich abgestimmt werden.

Das mit "C" bezeichnete Detail der Fig. 3a ist vergrößert in Fig. 3b dargestellt. Wie in Fig. 3b zu erkennen ist, ist zwischen den beiden Verbindungsblechen 9, 9' jeweils eine Unterlegscheibe 10 vorgesehen, um das Anziehen der Schraube 8 zu erleichtern und eine kraftschlüssige Anordnung mit planer Auflage des Schraubenkopfes bzw. der Mutter sicherzustellen. Die Unterlegscheibe 10 kann, abhängig von den Gegebenheiten, jedoch auch entfallen.

Die Oberflächen der Verbindungsbleche 9, 9' sind in ihrem gegenseitigen Kontaktbereich bevorzugt frei von Elastomermaterial, um eine optimale kraftschlüssige Metall-Metallverbindung zu gewährleisten.

Bei einem Einsatz der Abstreifvorrichtung mit nur einem Abstreifsegment wie in Fig. 3c dargestellt werden anstelle des korrespondierenden Abstreifsegments weitere Unterlegscheiben 10 eingesetzt, die ggf. an die vorliegende Rundung angepasst sind. Der Abstreifer lässt sich jedoch jederzeit und mit geringem Aufwand in einen Dual-Abstreifer umbauen.

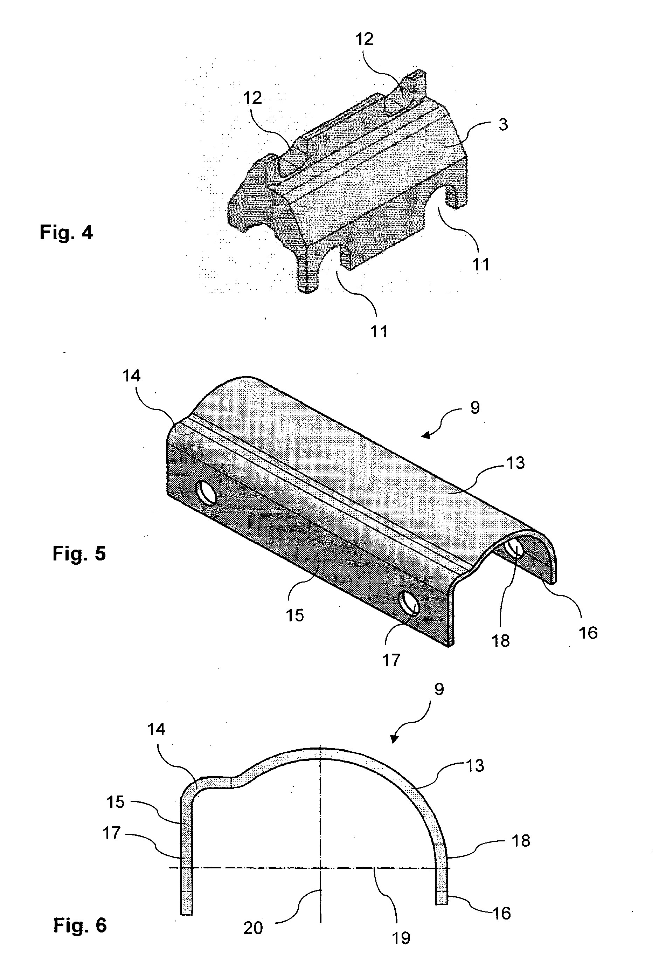

Wie in Fig. 4 gezeigt, weist der Elastomerkörper 3 beispielsweise jeweils zwei Ausnehmungen 11 für die Schrauben 8 zur Befestigung am Rohr 1 sowie zwei Ausnehmungen 12 für die Schrauben 7 zur Befestigung der Abstreifleiste 6 am Abstreifsegment 2 auf.

Gemäß Fig. 5 und Fig. 6 ist das Verbindungsblech 9 als im Wesentlichen halbzylinderförmige Halbschale ausgebildet. In einem Zylinderbereich 13 entspricht der

Innenradius des Verbindungsblechs 9 im Wesentlichen dem Außenradius des Rohrs 1. Ausgehend von einer Schulter 14 setzt sich das Verbindungsblech in einem ersten geraden Abschnitt 15 fort. Gegenüber dem ersten geraden Abschnitt 15 ist ein zweiter gerader Abschnitt 16 vorgesehen. Das Verbindungsblech 9 weist Bohrungen 17, 18 für die Verschraubung mit dem Rohr 1 auf, wobei die Bohrungen 17, 18 zumindest teilweise im Bereich der geraden Abschnitte 15, 16 angeordnet sind. Wie in Fig. 6 angedeutet ist, erstreckt sich das Verbindungsblech 9 im montierten Zustand über eine Mittelebene 19 des Rohrs 1 hinaus, wobei die Achse der Schraube 8 in der Mittelebene 19 liegt. Die zur Mittelebene 19 senkrechte weitere Mittelebene 20 des Rohrs 1 ist in Fig. 6 ebenfalls angedeutet. Das Verbindungsblech 9 ist somit asymmetrisch zur Achse bzw. zur Mittelebene 20 des Rohrs 1 ausgebildet.

Wie aus dem Vergleich mit Fig. 3a und 3b hervorgeht, wird der zweite gerade Abschnitt 16 des Verbindungsblechs 9 des einen Abstreifsegments 2 zwischen das Rohr 1 und den ersten geraden Abschnitt 15 des Verbindungsblechs 9' des anderen Abstreifsegments 2' eingesetzt und umgekehrt. Die hieraus gebildete Einheit wird gemeinsam mit Hilfe der Schrauben 8 mit dem Rohr 1 verschraubt. Die im Ausführungsbeispiel gezeigte asymmetrische Ausbildung des Verbindungsblechs 9, 9' erlaubt es somit, die Verbindungsbleche 9, 9' der paarweise einander zugeordneten Abstreifsegmente 2, 2' bzw. die Verbindungsbleche 9, 9' aller Abstreifsegmente 2, 2' der Abstreifvorrichtung gleichartig auszuführen. Dadurch, dass das Rohr 1 von jedem der Abstreifsegmente 2, 2' bzw. Verbindungsbleche 9, 9' nur halbseitig umschlossen wird, können die Abstreifsegmente 2, 2' auf das Rohr 1 aufgesetzt bzw. übergestülpt werden, ohne benachbarte Abstreifsegmente oder eine Vorspanneinrichtung zu entfernen.

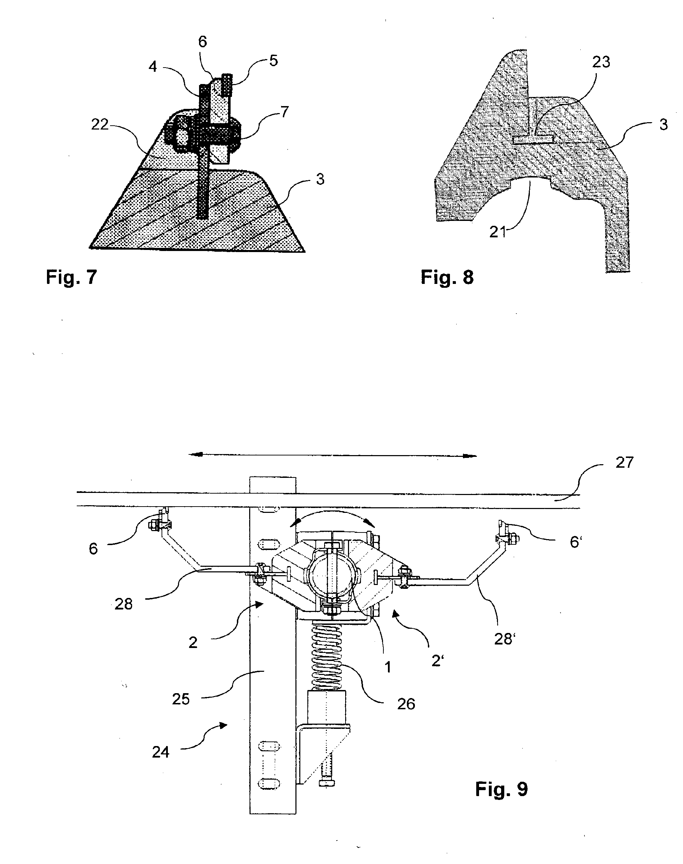

Wie in Fig. 7 gezeigt, ist die Abstreifleiste 6, an der die Abstreiflamellen 5 beispielsweise durch Verlöten fest angebracht sind, über die Schrauben 7 mit dem Halter 4 verbunden, der in den Elastomerkörper 3 eingebettet ist. Der Halter 4 wird einseitig durch einen Fortsatz 22 des Elastomerkörpers 3 unterstützt, der Ausnehmungen für die Schrauben 7 aufweist. Hierdurch kann das gewünschte asymmetrische Rückstellverhalten der Abstreiflamellen 5 erreicht werden. Auch in dieser Hinsicht ist das Abstreifsegment 2 somit asymmetrisch ausgebildet.

Gemäß Fig. 8 kann der Elastomerkörper 3 eine T-förmige Nut 23 aufweisen, in die ein T-förmiger Endbereich des in Fig. 8 nicht dargestellten Halters 4 eingesetzt wird und darin beispielsweise durch Kleben oder Vulkanisieren befestigt wird. Der Halter 4 bzw. dessen T-förmiger Endbereich kann auch beispielsweise durch Umgießen oder Einvulkanisieren mit dem Elastomerkörper verbunden werden.

Wie aus Fig. 9 hervorgeht, ist bei einer insbesondere für den Reversierbetrieb eines Förderbands geeigneten Ausführungsform der erfindungsgemäßen Abstreifvorrichtung das Rohr 1 an einer Vorspannvorrichtung 24 angeordnet, die einem starren Halter 25 und eine Schraubendruckfeder 26 umfasst. Die Schraubendruckfeder ist derart ausgelegt, dass jeweils eine Reihe von an den Abstreifleisten 6, 6' angebrachten Abstreiflamellen mit einer für die Reinigung des Förderbandes 27 geeigneten Kraft an dieses angedrückt wird. Die Abstreifleisten 6, 6' werden durch Zwischenbügel 28, 28' in einer hierfür geeigneten Position gehalten, die in Verlängerung der Halter 4, 4' mittels einer zusätzlichen Schraubverbindung angebracht sind und jeweils eine Abwicklung um insgesamt ca. 90° ausbilden. Durch ein Schwenken des Rohrs 1 bzw. der Abstreifsegmente 2, 2' können jeweils die Abstreiflamellen der Abstreifleiste 6 oder der Abstreifleiste 6' in Kontakt mit dem Förderband gebracht werden. Die Abstreifvorrichtung ist dabei derart ausgelegt, dass die jeweiligen Abstreiflamellen für jede Bandlaufrichtung (durch den Doppelpfeil über dem Förderband 27 angedeutet) und ggf. für damit verbundene unterschiedliche Bandgeschwindigkeiten eine jeweils optimale Ausbildung und Anordnung haben.

In Fig. 10 ist eine Ausführungsform einer Abstreifvorrichtung dargestellt, bei der der Zwischenbügel 28 gebogen und integral mit dem Halter 4 gebildet ausgebildet ist, wie dies bei Vorkopfabstreifern oder zum Reinigen von Trommeln erforderlich ist.

In Fig. 11 ist dargestellt, dass das die Abstreifvorrichtung tragende Rohr 1 im Bereich des Innengurtes des Förderbandes laufseitig schräg angeordnet werden kann. Durch diese Anordnung wird eine bessere Reaktion des Abstreifers auf großflächigere Anbackungen vermieden; gleichzeitig können hierdurch abgeschabte Verschmutzungen seitlich abtransportiert werden.

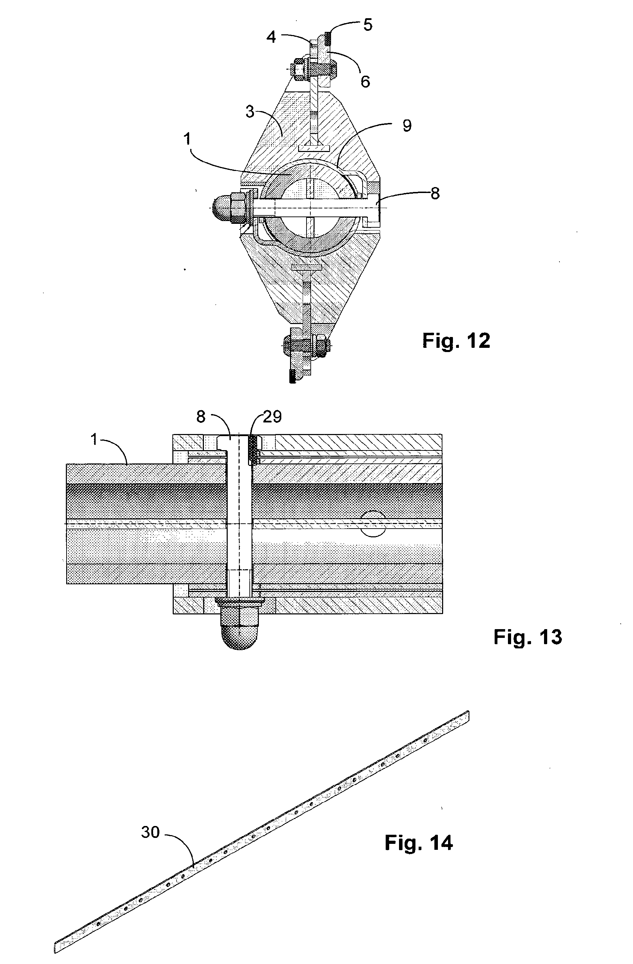

In Figur 12 ist ein erfindungsgemäßer Abstreifer in einer Schnittdarstellung dargestellt. In einer Detaildarstellung in Fig. 13 ist ersichtlich, dass die Schraube 8 mittels einer Sicherungsnase 29 so in eine korrespondierende Vertiefung eingreift, dass die Schraube vor einem Mitdrehen bei Anziehen der Mutter gesichert ist und damit einseitig angezogen werden kann. Dies ist vorteilhaft, da ein montierter Abstreifer unterhalb des Förderbandes oft sehr schwer zu warten ist. Durch die Verdrehsicherung kann dies vereinfacht werden, da nicht mehr zwei Schraubenschlüssel gleichzeitig gehandhabt werden müssen.

Figur 14 zeigt eine Versteifungsblech 30, das in das Tragrohr 1 eingeschweißt werden kann und entsprechende Ausnehmungen für den Durchgang der Schrauben aufweist. Ein derartiges Versteifungsblech 30 kann dadurch erforderlich sein, dass bei großen Bandbreiten aufgrund der Belastung (Durchbiegung) grundsätzlich größer dimensionierte Tragrohre erforderlich wären. Bei unterschiedlichen Rohrdurchmessern würden unterschiedliche Abstreifsegmente benötigt. Ziel ist es, mit einem Rohrdurchmesser auch größere Bandbreiten abzudecken. Hierzu erfolgt eine Versteifung des Rohres im Inneren durch ein durchgehendes Versteifungsblech 30.

Bei tiefen Temperaturen (Winter) versteifen die Gummitorsionselemente und verlieren dadurch an Elastizität. Durch Reibung an den Hartmetallabstreiflamellen entsteht andererseits Wärme, die über das einvulkanisierte Befestigungsblech an das Gummi des Elastomerkörpers 3, 3' abgegeben wird. Zur besseren Übertragung der Wärme an das Gummi und zur homogeneren Verteilung könnten z.B. Stifte in den Halter 4, 4' eingebracht werden, die in das Gummi des Elastomerkörpers 3, 3' hineinragen. Des Weiteren könnten auch Bauteile (Stäbe, Flach, Formteile) aus anderen Werkstoffen (z.B. Kupfer) an dem Befestigungsblech angebracht werden, die die Wärme schneller übertragen.

Bei einem Winterbetrieb in besonders kalten Regionen (z.B. in Russland etc.) kann es zu der bereits erwähnten Veränderung der Härte des Gummis kommen; dies kann sogar zu einer Versprödung führen. Unter solchen Bedingungen kann es sinnvoll sein, den Abstreifer zu heizen. Hierzu können elektrische Flachheizkörper in das Tragrohr eingebracht werden (nicht dargestellt) und von außen über eine Temperaturreglung soweit notwendig aktiviert werden.

Vielfach werden fördertechnische Baugruppen oder Bauteile (z.B. Abstreifer) benötigt, die in explosiven Gefahrenbereichen - sog. "ATEX-Bereichen" - eingesetzt werden (z.B. Untertage, in Kraftwerksbereichen für den Kohletransport zur Vermeidung von Kohlestaubexplosion). Durch Einsatz antistatischer Gummimaterialien kann der erfindungsgemäße Abstreifer auch in derartigen Bereichen eingesetzt werden.

Der Übersichtlichkeit halber sind nicht in allen Figuren alle Bezugszeichen eingetragen. Gleiche Bezugszeichen haben jeweils die gleiche Bedeutung.

### Bezugszeichenliste

- 1: Rohr
- 2, 2`: Abstreifsegmente
- 3, 3': Elastomerkörper
- 4, 4': Halter
- 5, 5': Abstreiflamellen
- 6, 6': Abstreifleisten
- 7: Schraube
- 8: Schraube
- 9, 9': Verbindungsblech
- 10: Unterlegscheibe
- 11: Ausnehmung
- 12: Ausnehmung
- 13: Zylinderbereich
- 14: Schulter
- 15: Gerader Abschnitt
- 16: Gerader Abschnitt
- 17: Bohrung
- 18: Bohrung
- 19: Mittelebene
- 20: Mittelebene
- 21,21': Ausnehmungen
- 22: Fortsatz
- 23: Nut
- 24: Vorspannvorrichtung
- 25: Halter
- 26: Schraubendruckfeder
- 27: Förderband
- 28, 28`: Zwischenbügel
- 29: Sicherungsnase
- 30: Verstärkungsleiste

## Patentansprüche

1. Abstreifvorrichtung für Förderbänder, insbesondere Wendeabstreifer, mit an einem quer zur Förderrichtung eines Förderbandes angeordneten Tragelement angebrachten Abstreifsegmenten (2, 2') mit daran befestigten Abstreiflamellen (5), die an das Förderband anpressbar sind, wobei die Abstreifsegmente (2, 2') jeweils einen Elastomerkörper (3,3') aufweisen, der drehfest mit dem Tragelement verbunden ist,
**dadurch gekennzeichnet, dass**
die Abstreifsegmente (2, 2') das Tragelement jeweils halbseitig umschließen und mindestens zwei Abstreifsegmente (2, 2') einander gegenüberliegend mit dem Tragelement verbunden sind, wobei die Abstreifsegmente (2, 2') jeweils ein halbschalenförmiges Verbindungselement (9, 9') zur Verbindung mit dem Tragelement umfassen.

2. Abstreifvorrichtung für Förderbänder mit an einem quer zur Förderrichtung eines Förderbandes angeordneten Tragelement angebrachten Abstreifsegment (2) mit einer daran befestigten Abstreiflamelle (5), die an das Förderband anpressbar ist, wobei das Abstreifsegment (2) einen Elastomerkörper (3) aufweist, der drehfest mit dem Tragelement verbunden ist,
**dadurch gekennzeichnet, dass**
das Abstreifsegment (2) das Tragelement halbseitig umschließt, wobei das Abstreifsegment (2) ein halbschalenförmiges Verbindungselement (9) zur Verbindung mit dem Tragelement umfasst, wobei das Abstreifsegment (2) und das halbschalenförmige Verbindungselement (9) derart ausgebildet sind, dass ein zweites, im Wesentlichen gleichartiges Abstreifsegment (2') dem ersten Abstreifsegment (2) gegenüberliegend mittels eines zweiten halbschalenförmigen Verbindungselementes (9') anbringbar ist.

3. Abstreifvorrichtung nach Anspruch 1 oder 2,
**dadurch gekennzeichnet, dass**
jeweils zwei Abstreifsegmente (2, 2') paarweise einander derart zugeordnet oder zuzuordnen sind, dass die ein Paar bildenden Abstreifsegmente (2, 2') einen Abschnitt des Tragelements über dessen gesamten Umfang umschließen.

4. Abstreifvorrichtung nach Anspruch 3,
**dadurch gekennzeichnet, dass**
die ein Paar bildenden Abstreifsegmente (2, 2') mit einer gemeinsamen Verschraubung am Tragelement befestigt oder befestigbar sind.

5. Abstreifvorrichtung nach einem der Ansprüche 1 bis 4,
**dadurch gekennzeichnet, dass**
das Tragelement ein zylindrisches Rohr (1) ist, das Verbindungselement als näherungsweise halbzylindrisches Verbindungselement (9, 9')ausgebildet ist und der Innenradius des Verbindungselements (9, 9') zumindest abschnittsweise dem Außenradius des Rohrs (1) entspricht.

6. Abstreifvorrichtung nach Anspruch 4 oder 5,
**dadurch gekennzeichnet, dass**
das Verbindungselement (9, 9') im Querschnitt eine einseitige Schulter (14) aufweist, die in einen ersten geraden Abschnitt (15) übergeht, der parallel zu einem gegenüberliegenden Endbereich gerichtet ist, wobei die lichte Innenweite zwischen dem ersten geraden Abschnitt (15) und dem gegenüberliegenden Endbereich näherungsweise dem Außendurchmesser des Rohrs (1) zuzüglich der Dicke des Verbindungselements (9, 9') im gegenüberliegenden Endbereich ist.

7. Abstreifvorrichtung nach Anspruch 6,
**dadurch gekennzeichnet, dass**
der dem ersten geraden Abschnitt (15) gegenüberliegende Endbereich einen zweiten geraden Abschnitt (16) aufweist.

8. Abstreifvorrichtung nach einem der vorhergehenden Ansprüche,
**dadurch gekennzeichnet, dass**
eine Abstreiflamelle (5, 5') eines Abstreifsegments (2, 2') direkt oder über ein Abstreifleistenelement (6, 6') an einem Halter (4, 4') befestigt ist, der einen Endbereich aufweist, der in den Elastomerkörper (3, 3') des Abstreifsegments (2, 2') eingebettet ist.

9. Abstreifvorrichtung nach Anspruch 8,
**dadurch gekennzeichnet, dass**
die eingebetteten Endbereiche der Halter (4, 4') zweier einander gegenüberliegender Abstreifsegmente (2, 2') unterschiedlich lang sind.

10. Abstreifvorrichtung nach einem der vorhergehenden Ansprüche,
**dadurch gekennzeichnet, dass**
die Abstreifsegmente (2, 2') einseitig mit dem Tragelement verbindbar sind.

11. Abstreifvorrichtung nach einem der Ansprüche 1 bis 10,
**dadurch gekennzeichnet, dass**
die Verbindungselemente (9, 9') als Verbindungsbleche ausgebildet sind und/oder dass die Verbindungselemente (9, 9') in Teilbereichen überlappend ausgebildet sind.

12. Abstreifvorrichtung nach einem der Ansprüche 1 bis 11,
**dadurch gekennzeichnet, dass**
die Abstreiflamellen (5) und der Elastomerkörper (3) sowie eventuelle dazwischen angeordnete Elemente derart wärmeleitend miteinander verbunden sind, dass die beim Abstreifvorgang entstehende Reibungswärme zur Temperierung des Elastomers genutzt wird.

## Claims

1. Scraper device for conveyor belts, in particular turning scraper, with scraper segments (2, 2'), attached to a support element arranged transverse to the conveying direction of a conveyor belt, to which scraper blades (5) are fastened, which can be pressed on to the conveyor belt, wherein the scraper segments (2, 2') each have an elastomeric body (3, 3'), which is attached in a torque-resistant manner to the support element,
**characterized in that**
the scraper segments (2, 2') each enclose half of the support element and at least two scraper segments (2, 2') are connected opposite to each other to the support element, wherein the scraper segments (2, 2 ') each have a half-shell-shaped connecting element (9, 9') for connection to the support element.

2. Scraper device for conveyor belts with a scraper segment (2) attached to a support element transverse to the conveying direction of a conveyor belt to which a scraper blade (5) is fastened, which can be pressed against the conveyor belt, wherein the scraper segment (2) has an elastomeric body (3), which is attached in a torque-resistant manner to the support element,
**characterised in that**
the scraper segment (2) comprises a half-shell shaped connecting element (9) for connection to the support element and the half-shell shaped connecting element (9) is configured so that a second, essentially similar scraper segment (2') can be attached to the opposing first scraper segment (2) by a second half-shell shaped connecting element (9').

3. Scraper device in accordance with claim 1 or 2,
**characterised in that**
the respective two scraper segments (2, 2') are associated or are to be associated with one another in pairs, so that the scraper segments (2, 2') forming a pair enclose a portion of the support element over its entire circumference.

4. Scraper device in accordance with claim 3,
**characterised in that**
the scraper segments (2, 2') forming a pair are fastened or can be fastened a common screw fastening on the support element.

5. Scraper device in accordance with one of claims 1 to 4,
**characterised in that**
the support element is configured as a cylindrical tube (1), the connecting element as approximately semi-cylindrical connecting element (9, 9') and the inner radius of the connecting element (9, 9'), corresponds at least in sections to the outer radius of the tube (1).

6. Scraper in accordance with claim 4 or 5,
**characterised in that**
the connecting element (9, 9') has in cross section a one-sided shoulder (14), which merges into a first straight section is (15), which is directed parallel to an opposing end portion, wherein the inside width between the first straight portion (15) and the opposite end region approximately corresponds to the outer diameter of the tube (1) plus the thickness of the connecting element (9, 9') in the opposite end region.

7. Scraper device in accordance with claim 6,
**characterised in that**
the end region opposite to the first straight portion (15) has a second straight portion (16).

8. Scraper device in accordance with one of the preceding claims,
**characterised in that**
a scraper blade (5, 5') of a scraper segment (2, 2') is fastened directly or by means of a scraper strip element (6, 6 ') to a holder (4, 4') having an end portion which is embedded in a region (3, 3') of the scraper segment (2, 2') consisting of an elastomer.

9. Scraper device in accordance with claim 8,
**characterised in that**
the embedded end portions of the holder (4, 4') of two opposing scraper segments (2, 2') are of different lengths.

10. Scraper device in accordance with one of the preceding claims,
**characterised in that**
the scraper segments (2, 2 ') can be connected on one side to the support element.

11. Scraper device in accordance with one of claims 1 to 10,
**characterised in that**
the connecting elements (9, 9') are formed as connecting plates and/or that the connecting elements (9, 9') are formed to overlap in partial areas.

12. Scraper device in accordance with one of claims 1 to 11,
**characterised in that**
the scraper blades (5) and the connecting region (3) consisting of an elastomer and any elements arranged between them are connected together in a heat-conducting manner, so that the frictional heat generated during the scraping operation is used for controlling the temperature of the elastomer.

## Revendications

1. Dispositif de raclage pour bandes transporteuses, en particulier racleur tournant, comportant des segments de raclage (2, 2') disposés transversalement par rapport au sens de transport d'une bande transporteuse et sur lesquels sont fixées des lamelles de raclage (5) qui peuvent être comprimées sur la bande transporteuse, les segments de raclage (2, 2') présentant respectivement un corps (3, 3') en élastomère qui est relié fixement en rotation à l'élément porteur,
**caractérisé en ce que**
les segments de raclage (2, 2') entourent l'élément porteur respectivement sur la moitié d'un côté et qu'au moins deux segments de raclage (2, 2') sont reliés à l'opposé à l'élément porteur, les segments de raclage (2, 2') comprenant respectivement un élément de liaison en forme de demi-coque (9, 9') pour établir la liaison avec l'élément porteur.

2. Dispositif de raclage pour bandes transporteuses, comportant un segment de raclage (2) disposé transversalement par rapport au sens de transport d'une bande transporteuse et sur lequel est fixée une lamelle de raclage (5) qui peut être comprimée sur la bande transporteuse, le segment de raclage (2, 2') présentant un corps en élastomère qui est relié fixement en rotation à l'élément porteur,
**caractérisé en ce que**
le segment de raclage (2) entoure l'élément porteur respectivement sur la moitié d'un côté, le segment de raclage (2) comprenant respectivement un élément de liaison en forme de demi-coque (9) pour établir la liaison avec l'élément porteur, le segment de raclage (2) et l'élément de liaison en forme de demi-coque (9) étant conçus de manière à ce qu'un second segment de raclage (2') sensiblement de même genre puisse être posé à l'opposé du premier segment de raclage (2) au moyen d'un second élément de liaison en forme de demi-coque (9').

3. Dispositif de raclage selon la revendication 1 ou 2,
**caractérisé en ce que**
respectivement deux segments de raclage (2, 2') sont ou doivent être respectivement associés l'un à l'autre de manière à ce que les segments de raclage formant une paire (2, 2') entourent une section de l'élément porteur sur toute sa circonférence:

4. Dispositif de raclage selon la revendication 3,
**caractérisé en ce que**
les segments de raclage formant une paire (2, 2') sont ou peuvent être fixés à l'aide d'un vissage commun à l'élément porteur.

5. Dispositif de raclage selon une des revendications 1 à 4,
**caractérisé en ce que**
l'élément porteur est un tube cylindrique (1), que l'élément de liaison est réalisé sous forme d'un élément de liaison approximativement demi-cylindrique (9, 9') et que le diamètre intérieur de l'élément de liaison (9, 9') équivaut du moins par sections au rayon extérieur du tube (1).

6. Dispositif de raclage selon la revendication 4 ou 5,
**caractérisé en ce que**
l'élément de liaison (9, 9') présente en section transversale un épaulement unilatéral (14) qui transite dans une première section rectiligne (15) qui est orientée parallèlement à une extrémité opposée, le diamètre intérieur entre la première section rectiligne (15) et l'extrémité opposée représentant approximativement le diamètre extérieur du tuyau (1), plus l'épaisseur de l'élément de liaison (9, 9') dans l'extrémité opposée.

7. Dispositif de raclage selon la revendication 6,
**caractérisé en ce que**
l'extrémité opposée à la première section rectiligne (15) présente une seconde section rectiligne (16).

8. Dispositif de raclage selon une des revendications précédentes,
**caractérisé en ce qu'**
une lamelle de raclage (5, 5') d'un segment de raclage (2, 2') est fixée directement ou via un élément à baguette de raclage (6, 6') à un support (4, 4') qui présente une extrémité qui est encastrée dans le corps en élastomère (3, 3') du segment de raclage (2, 2').

9. Dispositif de raclage selon la revendication 8,
**caractérisé en ce que**
les extrémités encastrées des supports (4, 4') de deux segments de raclage opposés (2, 2') ont des longueurs différentes.

10. Dispositif de raclage selon une des revendications précédentes,
**caractérisé en ce que**
les segments de raclage (2, 2') peuvent être reliés d'un côté à l'élément porteur.

11. Dispositif de raclage selon une des revendications 1 à 10,
**caractérisé en ce que**
les éléments de liaison (9, 9') sont réalisés sous forme de tôles de liaison et/ou que les éléments de liaison (9, 9') sont réalisés en chevauchement dans des zones partielles.

12. Dispositif de raclage selon une des revendications 1 à 11,
**caractérisé en ce que**
les lamelles de raclage (5) et le corps en élastomère (3) ainsi que d'éventuels éléments intercalés sont reliés ensemble avec conduction thermique de manière à ce que la chaleur de friction dégagée lors de l'opération de raclage soit utilisée pour tempérer l'élastomère.
